# FASCICULE DE BREVET EUROPEEN

(11) **EP 2 409 917 B1**
(45) Date de publication et mention de la délivrance du brevet: **25.02.2015**
(21) Numéro de dépôt: 11005140.6
(22) Date de dépôt: 24.06.2011
(51) Int. Cl.: B64C 27/82

(54) **Procédé et aéronef à voilure tournante muni d'un moyen de stabilisation minimisant le phénoméne de bosse d'assiette**
Verfahren und Luftfahrzeug mit Drehfahrwerk, das mit einem Stabilisationsmittel zur Minimierung des attitude hump -Phänomens ausgestattet ist
Method and rotary-wing aircraft provided with a stabilisation means minimising the attitude hump phenomenon

(30) Priorité: 20.07.2010 FR 1003035
(43) Date de publication de la demande: 25.01.2012
(73) Titulaire: Airbus Helicopters, 13725 Marignane Cedex (FR)
(72) Inventeur: Borie, Sylvie, 13880 Velaux (FR); Leyder, Samuel, 13880 Velaux (FR); Allongue, Marc, 13008 Marseille (FR)
(74) Mandataire: GPI & Associés

(56) Documents cités:
- EP-A2- 0 229 896
- GB-A- 606 420
- NL-C- 16 887
- US-A- 3 583 659

## Description

La présente invention concerne un procédé et un aéronef à voilure tournante muni d'un moyen minimisant le phénomène de bosse d'assiette, un hélicoptère notamment.

Classiquement, un hélicoptère comprend une cellule s'étendant longitudinalement d'une extrémité avant vers une extrémité arrière de part et d'autre d'un plan antéropostérieur de symétrie, et selon une direction verticale d'une portion inférieure équipée d'un train d'atterrissage vers une portion supérieure munie d'un rotor principal de sustentation et de propulsion.

De plus, la cellule comporte un rotor arrière au niveau de son extrémité arrière. Le rotor arrière a pour fonction de contrer le couple exercé par le rotor principal sur la cellule, en permettant de plus au pilote de contrôler les mouvements en lacet de l'hélicoptère.

Par ailleurs, un hélicoptère comprend parfois des surfaces stabilisatrices additionnelles. Par exemple, il est usuel d'équiper un hélicoptère d'une surface stabilisatrice en lacet contenue par exemple dans la plan antéropostérieur pour lutter contre ledit couple à grande vitesse.

De même, l'hélicoptère comporte parfois un moyen de stabilisation en tangage présentant une angulation dont la valeur absolue est comprise entre 0° et 90° avec ledit plan antéropostérieur, ce moyen de stabilisation en tangage comportant par exemple deux surfaces stabilisatrices en tangage s'étendant symétriquement de part et d'autre dudit plan antéropostérieur.

On nomme parfois un tel moyen de stabilisation en tangage « empennage horizontal ».

Le moyen de stabilisation en tangage est très efficace, son efficacité croissant conjointement avec la vitesse d'avancement de l'hélicoptère. De plus, on comprend qu'on maximise l'efficacité d'un moyen de stabilisation en tangage en maximisant sa surface alaire.

Cependant, sur un hélicoptère traditionnel volant en translation à basse vitesse voire en stationnaire, l'air traversant le rotor principal est défléchi vers l'arrière et vient impacter le moyen de stabilisation en tangage. Cet air traversant exerce alors des efforts sur le moyen de stabilisation en tangage que le pilote compense en manoeuvrant ses commandes de vol.

Toutefois, lorsque les conditions de vol varient, la déflection de l'air traversant est aussi modifiée. Il en va donc de même des efforts exercés sur le moyen de stabilisation en tangage.

Ce phénomène est dénommé « bosse d'assiette » par l'homme du métier.

En phase d'accélération ou de décélération, la bosse d'assiette, à savoir les efforts exercés par l'air traversant le rotor principal en impactant le moyen de stabilisation en tangage, tend à faire cabrer l'hélicoptère. Pour stabiliser la vitesse de l'hélicoptère, le pilote doit alors utiliser son manche de commande de pas cyclique des pales du rotor principal pour diminuer le cabrage de cet hélicoptère.

Au fur et à mesure de l'accroissement de la vitesse d'avancement de l'hélicoptère, le flux d'air provenant du rotor principal se remet dans l'axe d'avancement et s'écoule donc au-dessus du moyen de stabilisation en tangage et n'induit donc plus ce phénomène de bosse d'assiette.

On comprend que l'optimisation du moyen de stabilisation en tangage réalisé en maximisant sa surface alaire accentue la bosse d'assiette.

Dès lors, il parait impossible d'utiliser un moyen de stabilisation en tangage ayant une grande surface alaire sur un hélicoptère sans induire une augmentation du phénomène de bosse d'assiette.

On note que l'arrière plan technologique comprend le document EP 1547919 relatif à un hélicoptère muni d'un moyen de stabilisation en tangage. Ce moyen de stabilisation peut comprendre deux surfaces stabilisatrices en tangage s'étendant symétriquement de part et d'autre dudit plan antéropostérieur.

Ces surfaces stabilisatrices peuvent être horizontales en étant orthogonales au plan antéropostérieur par exemple, ou peuvent conjointement décrire une forme en V en présentant une angulation comprise entre 0° et 90° avec ledit plan antéropostérieur

Chaque surface stabilisatrice en tangage peut être équipée d'un volet.

Le document EP229896 présente un aéronef à voilure tournante muni d'un moyen de stabilisation en tangage supérieur à l'aplomb d'un moyen de stabilisation en tangage inférieur. On dénomme parfois un tel dispositif « empennage multi-plan ».

Les documents US2369652 et GB 606420 ont pour objet un aéronef à voilure tournante muni d'un moyen de stabilisation en tangage supérieur et d'un moyen de stabilisation en tangage inférieur légèrement décalé par rapport à une direction longitudinale de l'aéronef.

En outre, on connaît l'enseignement des documents US 3 583 659 et NL 0 229 896.

Ces documents fournissent un enseignement intéressant, mais cet enseignement reste éloigné de la minimisation du phénomène de la bosse d'assiette.

La présente invention a alors pour objet de proposer un procédé et un dispositif permettant de minimiser le phénomène de bosse d'assiette, pour un aéronef à voilure tournante muni d'organes de stabilisation en tangage susceptibles d'être impactés par un flux d'air provenant de ladite voilure tournante.

Selon l'invention, un procédé selon la revendication 1 pour minimiser le phénomène de bosse d'assiette relatif à un aéronef à voilure tournante muni d'une cellule s'étendant longitudinalement d'une extrémité avant vers une extrémité arrière ainsi que d'un moyen de stabilisation supérieur en tangage et d'au moins un moyen de stabilisation inférieur en tangage, est remarquable en ce que l'on positionne chaque moyen de stabilisation inférieur dans un sillage d'un moyen de stabilisation supérieur généré par un flux d'air traversant la voilure tournante en impactant un extrados du moyen de stabilisation supérieur.

On rappelle qu'un sillage correspond à une région en aval d'un obstacle disposé dans un fluide en mouvement, dans laquelle le fluide est en repos relatif par rapport à l'obstacle. Ainsi, chaque moyen de stabilisation inférieur se situe dans une zone d'ombre aérodynamique en aval d'un moyen de stabilisation supérieur.

Dès lors, selon l'invention, on n'utilise pas un unique moyen de stabilisation ayant une importante surface alaire impactée par un flux d'air provenant de la voilure tournante.

A l'inverse, on utilise au moins deux moyen de stabilisation, un moyen de stabilisation inférieur se trouvant dans le sillage d'un moyen de stabilisation supérieur.

Par suite, le moyen de stabilisation inférieur participe à la stabilisation en tangage de l'aéronef mais ne participe pas au phénomène de bosse d'assiette.

Ce procédé peut posséder une ou plusieurs des caractéristiques qui suivent.

Par exemple, on peut disposer un moyen de stabilisation supérieur entre un premier plan passant par le moyen de stabilisation inférieur et un deuxième plan contenant la voilure tournante, le moyen de stabilisation supérieur étant positionné en amont du moyen de stabilisation inférieur par rapport au sens d'avancement vers l'avant de l'aéronef.

Selon un autre aspect, le moyen de stabilisation supérieur comportant une surface de stabilisation supérieure munie d'un bord d'attaque supérieur et d'un bord de fuite supérieur et s'étendant transversalement d'une extrémité fixe solidarisée à une cellule de l'aéronef vers une extrémité libre, le moyen de stabilisation inférieur comportant une surface de stabilisation inférieure munie d'un bord d'attaque inférieur et d'un bord de fuite inférieur et s'étendant transversalement d'une extrémité fixe solidarisée à ladite cellule vers une extrémité libre, on décale longitudinalement le bord de fuite inférieur par rapport au bord de fuite supérieur vers l'extrémité arrière de l'aéronef d'une distance longitudinale égale au produit d'une corde maximale du moyen de stabilisation supérieur et d'un coefficient multiplicateur, ledit coefficient multiplicateur étant compris entre 0 et 3, ledit coefficient multiplicateur n'étant pas inférieure à 1.

On rappelle que la corde d'un profil aérodynamique est la plus petite distance séparant le bord d'attaque du profil de son bord de fuite. On dénomme alors la corde la plus longue de chaque surface de stabilisation « corde maximale ».

Ce coefficient multiplicateur est éventuellement égal à l'unité, soit au chiffre un.

Selon un autre aspect, on positionne chaque moyen de stabilisation inférieur dans un sillage du moyen de stabilisation supérieur généré par un flux d'air traversant la voilure tournante en impactant un extrados d'un moyen de stabilisation supérieur lorsque ledit aéronef a une vitesse d'avancement inférieure à une vitesse prédéterminée, égale par exemple à 60 noeuds soit environ 30.8 mètres par seconde.

Outre un procédé, l'invention vise un aéronef à voilure tournante muni d'une cellule s'étendant longitudinalement, d'un moyen de stabilisation supérieur en tangage et d'au moins un moyen de stabilisation inférieur en tangage mettant en oeuvre ce procédé.

L'aéronef est alors notamment remarquable en ce que chaque moyen de stabilisation inférieur est agencé dans le sillage d'un moyen de stabilisation supérieur généré par un flux d'air traversant ladite voilure tournante en impactant un extrados d'un moyen de stabilisation supérieur

Cet aéronef peut notamment comporter une ou plusieurs des caractéristiques qui suivent.

Le moyen de stabilisation supérieur comportant au moins une surface de stabilisation supérieure s'étendant transversalement d'une extrémité fixe solidarisée à une cellule vers une extrémité libre, le moyen de stabilisation inférieur comportant une surface de stabilisation inférieure s'étendant transversalement d'une extrémité fixe solidarisée à une cellule vers une extrémité libre, ladite surface de stabilisation inférieure étant agencée dans le sillage de ladite surface de stabilisation supérieure généré par un flux d'air traversant ladite voilure tournante en impactant un extrados de cette surface de stabilisation supérieure.

Par ailleurs, l'extrémité libre de la surface de stabilisation supérieure est éventuellement reliée à l'extrémité libre de la surface de stabilisation inférieure correspondante par une surface aérodynamique plus ou moins plane.

En outre, le moyen de stabilisation supérieur comportant une surface de stabilisation supérieure munie d'un bord d'attaque supérieur et d'un bord de fuite supérieur et s'étendant transversalement d'une extrémité fixe solidarisée à une cellule vers une extrémité libre, ledit moyen de stabilisation inférieur comportant une surface de stabilisation inférieure munie d'un bord d'attaque inférieur et d'un bord de fuite inférieur et s'étendant transversalement d'une extrémité fixe solidarisée à une cellule vers une extrémité libre, le bord de fuite inférieur est décalé longitudinalement par rapport au bord de fuite supérieur vers l'arrière de l'aéronef d'une distance longitudinale égale au produit d'une corde maximale du moyen de stabilisation supérieur et d'un coefficient multiplicateur, ledit coefficient multiplicateur étant compris entre 0 et 3, ledit coefficient multiplicateur n'etant pas inferieure à 1.

L'invention et ses avantages apparaîtront avec plus de détails dans le cadre de la description qui suit avec des exemples de réalisation donnés à titre illustratif en référence aux figures annexées qui représentent :
- les figures 1 et 2, des schémas montrant un aéronef selon l'état de la technique,
- la figure 3, une vue latérale d'un aéronef selon l'invention explicitant le procédé mis en oeuvre,
- la figure 4, un schéma d'un aéronef selon un premier mode de réalisation,
- la figure 5, un schéma d'un aéronef selon un deuxième mode de réalisation,
- la figure 6, un schéma d'un aéronef selon une première variante de l'invention et,
- la figure 7, un schéma d'un aéronef selon une deuxième variante de l'invention.

Les éléments présents dans plusieurs figures distinctes sont affectés d'une seule et même référence.

On note que trois directions X, Y et Z orthogonales les unes par rapport aux autres sont représentées sur les figures.

La direction X est dite longitudinale. Le terme « longitudinal » est relatif à une dimension longitudinale des structures décrites selon cette direction longitudinale X.

Une autre direction Y est dite transversale.

Enfin, une troisième direction Z est dite d'élévation et correspond aux dimensions en hauteur des structures décrites. Le terme « épaisseur » est alors relatif à une dimension en élévation des structures décrites selon cette direction d'élévation.

Le plan X, Z représente le plan antéropostérieur de symétrie des aéronefs représentés.

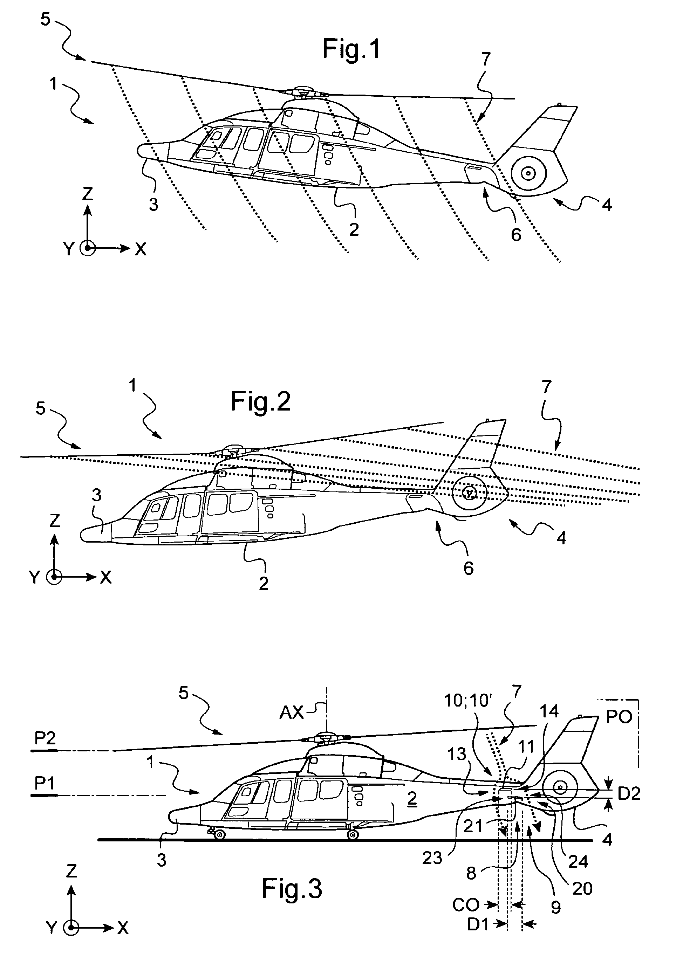

Les figures 1 et 2 présentent un aéronef 1 selon l'état de la technique.

En référence à la figure 1, cet aéronef 1 comprend une cellule 2 s'étendant longitudinalement d'une extrémité avant 2 vers une extrémité arrière 4. La cellule 2 porte alors une voilure tournante 5 munie d'un rotor de sustentation.

De plus, l'extrémité arrière 4 est pourvue d'un moyen de stabilisation 6 en tangage s'étendant transversalement à partir de la cellule 2. La surface alaire de ce moyen de stabilisation 6 est maximisée pour optimiser son efficacité.

A basse vitesse, à savoir lorsque la vitesse d'avancement vers l'avant de l'aéronef est inférieure à une vitesse prédéterminée, égale par exemple à 60 noeuds soit environ 30.8 mètres par seconde, le flux d'air 7 traversant la voilure tournante 5 impacte l'extrados du moyen de stabilisation 6.

A l'inverse, à grande vitesse, ce flux d'air 7 s'écoule au dessus du moyen de stabilisation 6.

Cet impact variable du flux d'air 7 sur le moyen de stabilisation 6 est à l'origine du phénomène dit de bosse d'assiette.

La figure 3 présente un aéronef 1 à voilure tournante appliquant le procédé selon l'invention pour minimiser le phénomène de bosse d'assiette.

Cet aéronef 1 comprend une cellule 2 s'étendant longitudinalement d'une extrémité avant 2 vers une extrémité arrière 4, la cellule 2 portant une voilure tournante 5 munie d'un rotor de sustentation. Cette cellule 2 est disposée de part et d'autre d'un plan antéropostérieur de symétrie P0

De plus, l'aéronef 1 comporte un moyen de stabilisation supérieur 10 en tangage et au moins un moyen de stabilisation inférieur 20 en tangage.

Le moyen de stabilisation supérieur 10 en tangage comporte au moins une surface de stabilisation 11 en tangage, éventuellement inclinable et/ou équipée d'au moins un volet, s'étendant transversalement à partir de la cellule 2 en présentant optionnellement un dièdre négatif ou positif. De même, le moyen de stabilisation inférieur 20 en tangage comporte au moins une surface de stabilisation 21 en tangage, éventuellement inclinable et/ou équipée d'au moins un volet, s'étendant transversalement à partir de la cellule 2 en présentant optionnellement un dièdre négatif ou positif.

Chaque surface de stabilisation inférieure 21 coopère avec une surface de stabilisation supérieure 11.

En effet, selon l'invention, on positionne chaque moyen de stabilisation inférieur 20 dans un sillage 8 du moyen de stabilisation supérieur 10 correspondant. Ce sillage est généré par le flux d'air 7 traversant la voilure tournante 5 en impactant un extrados 10' de ce moyen de stabilisation supérieur 10.

Ainsi, au lieu d'utiliser un moyen de stabilisation en tangage muni d'une grande surface alaire, on met en oeuvre un moyen de stabilisation supérieur et au moins un moyen de stabilisation inférieur ayant chacun une surface alaire minimisée.

Par conséquent, chaque surface de stabilisation inférieure 21 d'un moyen de stabilisation inférieur 20 est agencée dans un sillage d'une surface de stabilisation supérieure 11 d'un moyen de stabilisation supérieur 10. Ce sillage résulte de l'impact du flux d'air 7 traversant la voilure tournante 5 sur la surface de stabilisation supérieure 11.

A basse vitesse, à savoir en dessous d'une vitesse prédéterminée de l'aéronef par exemple de 60 noeuds soit environ 30.8 mètres par seconde selon un sens d'avancement 100, le flux d'air 7 provenant de la voilure tournante 5 impacte donc l'extrados 10' du moyen de stabilisation supérieur 10, mais n'impacte pas directement l'extrados du moyen de stabilisation inférieur 20.

En disposant le moyen de stabilisation inférieur 20 dans le sillage d'un moyen de stabilisation supérieur 10 et donc dans une zone d'ombre 9 aérodynamique au regard du flux d'air 7 provenant de la voilure tournante, on garantit alors que ce flux d'air 7 n'impacte pas directement ce moyen de stabilisation inférieur 20. Le phénomène de bosse d'assiette est ainsi réduit par rapport au fonctionnement d'un aéronef classique.

Conformément à la variante préférée de la figure 3, on agence le moyen stabilisation supérieur 10 entre un premier plan P1 orthogonal au plan antéropostérieur P0 passant par le moyen de stabilisation inférieur 20 et un deuxième plan P2 orthogonal au plan antéropostérieur P0 dans lequel évolue la voilure tournante 5 en vol stationnaire par exemple.

De plus, le moyen de stabilisation supérieur 10 est positionné en amont du moyen de stabilisation inférieur 20 par rapport au sens d'avancement 100 vers l'avant de l'aéronef 1.

Ainsi, la plus petite distance séparant l'axe de rotation d'un rotor de la voilure tournante d'une surface de stabilisation supérieure 10 est inférieure à la plus petite distance séparant cet axe de rotation d'une surface de stabilisation inférieure coopérant avec cette surface de stabilisation supérieure

Par exemple, on décale longitudinalement selon une direction longitudinale X le bord de fuite inférieur 24 d'une surface de stabilisation inférieure 21 par rapport au bord de fuite supérieur 14 de la surface de stabilisation supérieure 11 correspondante vers l'extrémité arrière 4 d'une distance longitudinale D1.

La trace du bord de fuite supérieur 14 de la surface de stabilisation supérieure 11 est alors séparée de la trace du bord de fuite inférieur 24 d'une surface de stabilisation inférieure 21 d'une part par un écartement horizontal égal à ladite distance longitudinale D1, et, d'autre part, par un écartement en élévation D2

La surface de stabilisation supérieure 11 du moyen de stabilisation supérieur 10 présentant une corde maximale C0, la distance longitudinale D1 est égale au produit de la corde maximale C0 et d'un coefficient multiplicateur K. Ce coefficient multiplicateur K est compris entre 0 et 3, de préférence égal à l'unité

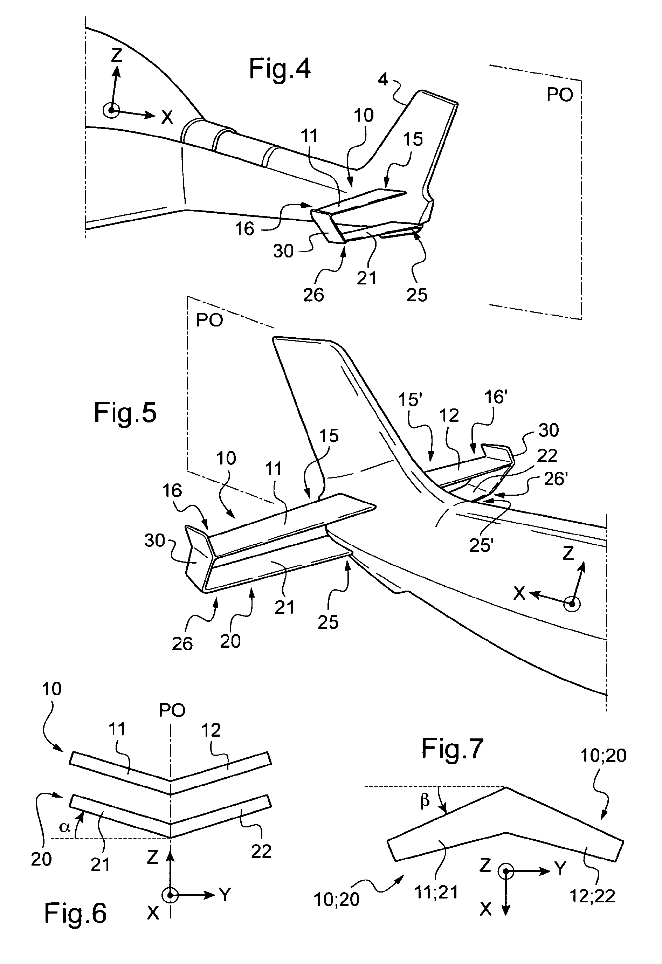

Selon le premier mode de réalisation de la figure 4, le moyen de stabilisation supérieur 10 comporte une unique surface de stabilisation supérieure 11 s'étendant d'une extrémité fixe 15 solidarisée à la cellule 2 vers une extrémité libre 16.

De même, un moyen de stabilisation inférieur 20 comporte une unique surface de stabilisation inférieure 21 s'étendant d'une extrémité fixe 25 solidarisée à la cellule 2 vers une extrémité libre 26.

L'extrémité libre 16 de la surface de stabilisation supérieure 11 peut être reliée à l'extrémité libre 26 de la surface de stabilisation inférieure 21 par une surface aérodynamique 30 plus ou moins verticale, telle qu'une plaque latérale par exemple.

Selon le deuxième mode de réalisation de la figure 5, le moyen de stabilisation supérieur 10 comporte une première surface de stabilisation supérieure 11 s'étendant selon une première direction d'une extrémité fixe 15 solidarisée à la cellule 2 vers une extrémité libre 16, et une deuxième surface de stabilisation supérieure 12 s'étendant selon une deuxième direction opposée à la première direction d'une extrémité fixe 15' solidarisée à la cellule 2 vers une extrémité libre 16'.

La première surface de stabilisation supérieure 11 et la deuxième surface de stabilisation supérieure 12 peuvent être symétriques par rapport au plan antéropostérieur P0.

De même, le moyen de stabilisation inférieur 20 comporte une première surface de stabilisation inférieure 21 s'étendant selon une première direction d'une extrémité fixe 25 solidarisée à la cellule 2 vers une extrémité libre 26, et une deuxième surface de stabilisation inférieure 22 s'étendant selon une deuxième direction opposée à la première direction d'une extrémité fixe 25' solidarisée à la cellule 2 vers une extrémité libre 26'.

La première surface de stabilisation inférieure 21 et la deuxième surface de stabilisation inférieure 22 peuvent être symétriques par rapport au plan antéropostérieur P0.

On comprend qu'il est concevable d'utiliser plusieurs moyens de stabilisation inférieurs , chaque moyen de stabilisation inférieur 20 se trouvant dans le sillage 8 du moyen de stabilisation supérieur 10 généré par un flux d'air traversant la voilure tournante 5 en impactant un extrados 10' d'un moyen de stabilisation supérieur 10.

Indépendamment du mode de réalisation, chaque surface de stabilisation peut présenter un dièdre, un dièdre positif selon la version conforme à la figure 6 ou un dièdre négatif, avec une inclinaison α comprise entre 0° et plus ou moins 90° avec le plan antéropostérieur P0.

De même, en référence à la variante de la figure 7, indépendamment du mode de réalisation, chaque surface de stabilisation peut présenter une flèche avant ou une flèche arrière et donc présenter une inclinaison β de manière à être dirigée vers l'extrémité arrière ou l'extrémité avant de l'aéronef.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Procédé pour minimiser le phénomène de bosse d'assiette relatif à un aéronef (1) à voilure tournante muni d'une cellule (2) s'étendant longitudinalement d'une extrémité avant (3) vers une extrémité arrière (4) ainsi que d'un moyen de stabilisation supérieur (10) en tangage et d'au moins un moyen de stabilisation inférieur (20) en tangage,
dans lequel on positionne chaque moyen de stabilisation inférieur (20) dans un sillage (8) dudit moyen de stabilisation supérieur (10) généré par un flux d'air traversant (7) ladite voilure tournante (5) en impactant un extrados (10') d'un moyen de stabilisation supérieur (10) ledit moyen de stabilisation supérieur (10) comportant une surface de stabilisation supérieure (11, 12) munie d'un bord d'attaque supérieur (13) et d'un bord de fuite supérieur (14) et s'étendant transversalement d'une extrémité fixe (15) solidarisée à une cellule (2) vers une extrémité libre (16), ledit moyen de stabilisation inférieur (20) comportant une surface de stabilisation inférieure (21, 22) munie d'un bord d'attaque inférieur (23) et d'un bord de fuite inférieur (24) et s'étendant transversalement d'une extrémité fixe (25) solidarisée à une cellule (2) vers une extrémité libre (26), on décale longitudinalement le bord de fuite inférieur (24) par rapport au bord de fuite supérieur (14) vers l'extrémité arrière d'une distance longitudinale (D1) égale au produit d'une corde maximale (C0) du moyen de stabilisation supérieur et d'un coefficient multiplicateur (K), **caractérisé en ce que** ledit coefficient multiplicateur (K) est compris entre 0 et 3, le coefficient multiplicateur n'étant pas inférieur à 1.

2. Procédé selon la revendication 1,
**caractérisé en ce que** l'on dispose ledit moyen stabilisation supérieur (10) entre un premier plan (P1) passant par ledit moyen de stabilisation inférieur (20) et un deuxième plan (P2) contenant ladite voilure tournante (5), le moyen de stabilisation supérieur (10) étant positionné en amont du moyen de stabilisation inférieur (20) par rapport au sens d'avancement (100) vers l'avant de l'aéronef (1).

3. Procédé selon l'une quelconque des revendications 1 à 2,
**caractérisé en ce que** ledit coefficient multiplicateur (K) est égal à l'unité.

4. Procédé selon l'une quelconque des revendications 1 à 3,
**caractérisé en ce que** l'on positionne chaque moyen de stabilisation inférieur (20) dans un sillage (8) dudit moyen de stabilisation supérieur (10) généré par un flux d'air (7) traversant ladite voilure tournante (5) en impactant un extrados (11') d'un moyen de stabilisation supérieur (10) lorsque ledit aéronef (1) à une vitesse d'avancement inférieure à une vitesse prédéterminée.

5. Aéronef (1) à voilure tournante muni d'une cellule (2) s'étendant longitudinalement d'une extrémité avant (3) vers une extrémité arrière (4), d'un moyen de stabilisation supérieur (10) en tangage et d'au moins un moyen de stabilisation inférieur (20) en tangage, chaque moyen de stabilisation inférieur (20) étant agencé dans le sillage (8) dudit moyen de stabilisation supérieur (10) généré par un flux d'air (7) traversant ladite voilure tournante (5) en impactant un extrados (10') d'un moyen de stabilisation supérieur (10) pour minimiser le phénomène de bosse d'assiette, ledit moyen de stabilisation supérieur (10) comportant une surface de stabilisation supérieure (11, 12) munie d'un bord d'attaque supérieur (13) et d'un bord de fuite supérieur (14) et s'étendant transversalement d'une extrémité fixe (15) solidarisée à une cellule (2) vers une extrémité libre (16), ledit moyen de stabilisation inférieur (20) comportant une surface de stabilisation inférieure (21, 22) munie d'un bord d'attaque inférieur (23) et d'un bord de fuite inférieur (24) et s'étendant transversalement d'une extrémité fixe (25) solidarisée à une cellule (2) vers une extrémité libre (26), le bord de fuite inférieur (24) est décalé longitudinalement par rapport au bord de fuite supérieur (15) vers l'arrière (4) de l'aéronef d'une distance longitudinale (D1) égale au produit d'une corde maximale (C0) du moyen de stabilisation supérieur (10) et d'un coefficient multiplicateur (K), **caractérisé en ce que** ledit coefficient multiplicateur (K) est compris entre 0 et 3, le coefficient multiplicateur n'étant pas inférieur à 1.

6. Aéronef selon la revendication 5,
**caractérisé en ce que**, ledit moyen de stabilisation supérieur (10) comportant au moins une surface de stabilisation supérieure (11, 12) s'étendant transversalement d'une extrémité fixe (15) solidarisée à une cellule (2) vers une extrémité libre (16), ledit moyen de stabilisation inférieur (20) comportant une surface de stabilisation inférieure (21, 22) s'étendant transversalement d'une extrémité fixe (25) solidarisée à une cellule (2) vers une extrémité libre (26), ladite surface de stabilisation inférieure (21, 22) étant agencée dans le sillage (8) de ladite surface de stabilisation supérieure (11, 12) généré par un flux d'air (7) traversant ladite voilure tournante (5) en impactant un extrados (10') de cette surface de stabilisation supérieure (11, 12).

7. Aéronef selon l'une quelconque des revendications 5 à 6,
**caractérisé en ce que** l'extrémité libre (16) de la surface de stabilisation supérieure (11, 12) est reliée à l'extrémité libre (26) de la surface de stabilisation inférieure (21, 22) par une surface aérodynamique (30).

## Patentansprüche

1. Verfahren zur Minimierung des Attitude-Hump-Phänomens bei einem Drehflügelflugzeug (1) mit einer Kabine (2), die sich in Längsrichtung von einem vorderen Ende (3) bis zu einem hinteren Ende (4) erstreckt, sowie mit einem oberen Nickbewegungsstabilisierungsmittel (10) und mindestens einem unteren Nickbewegungsstabilisierungsmittel (20), bei dem jedes untere Stabilisierungsmittel (20) in einer Wirbelschleppe (8) des oberen Stabilisierungsmittels (10) angeordnet wird, wobei die Wirbelschleppe durch eine Luftströmung erzeugt wird, die den Drehflügel (5) durchquert, wobei sie auf eine Saugseite (10') eines oberen Stabilisierungsmittels (10) auftrifft, wobei das obere Stabilisierungsmittel (10) eine obere Stabilisierungsfläche (11, 12) aufweist, mit einer oberen Vorderkante (13) und einer oberen Unterkante (14), und wobei die obere Stabilisierungsfläche sich quer von einem festen Ende (15) aus, welches an der Kabine (2) befestigt ist, auf ein freies Ende (16) zu erstreckt, wobei das untere Stabilisierungsmittel (20) eine untere Stabilisierungsfläche (21, 22) aufweist, die mit einer unteren Vorderkante (23) und einer unteren Hinterkante (24) versehen ist, und sich quer von einem festen Ende (25), welches an der Kabine (2) befestigt ist, auf ein freies Ende (26) zu erstreckt, wobei in Längsrichtung die untere Hinterkante (24) relativ zur oberen Hinterkante (14) zum hinteren Ende hin um eine Längsstrecke (D1) versetzt wird, die gleich dem Produkt aus einer maximalen Breite (C0) des oberen Stabilisierungsmittels und einem Multiplikationskoeffizienten (K) ist,
**dadurch gekennzeichnet, dass** der Multiplikationskoeffizient (K) zwischen 0 und 3 liegt, wobei der Multiplikationskoeffizient nicht kleiner als 1 ist.

2. Verfahren nach Anspruch 1,
**dadurch gekennzeichnet, dass** das obere Stabilisierungsmittel (10) zwischen einer ersten Ebene (P1), die durch das untere Stabilisierungsmittel (20) verläuft, und einer zweiten Ebene (P2), die den Drehflügel (5) enthält, angeordnet wird, wobei das obere Stabilisierungsmittel (10) bezüglich der Vortriebsrichtung (100) nach vorne vor dem unteren Stabilisierungsmittel (20) angeordnet wird.

3. Verfahren nach einem der Ansprüche 1 bis 2,
**dadurch gekennzeichnet, dass** der Multiplikationskoeffizient (K) gleich 1 ist.

4. Verfahren nach einem der Ansprüche 1 bis 3,
**dadurch gekennzeichnet, dass** jedes untere Stabilisierungsmittel (20) in einer Wirbelschleppe (8) des oberen Stabilisierungsmittels (10) angeordnet wird, wobei die Wirbelschleppe von einer Luftströmung (7) erzeugt wird, die den Drehflügel (5) durchquert, indem sie auf einer Saugseite (11') eines oberen Stabilisierungsmittels (10) auftrifft, wenn das Luftfahrzeug (1) eine Vortriebsgeschwindigkeit hat, die kleiner ist als eine vorbestimmte Geschwindigkeit.

5. Drehflügelluftfahrzeug (1) mit einer Kabine (2), die sich in Längsrichtung von einem vorderen Ende (3) zu einem hinteren Ende (4) erstreckt, mit einem oberen Mittel zur Stabilisierung (10) gegenüber Nickbewegungen und einem unteren Mittel (20) zur Stabilisierung gegenüber Nickbewegungen, wobei jedes der unteren Stabilisierungsmittel (20) in der Wirbelschleppe (8) des oberen Stabilisierungsmittels (10) angeordnet ist, wobei die Wirbelschleppe erzeugt wird von einer Luftströmung (7), die den Drehflügel (5) durchquert, indem sie auf eine Saugseite (10') eines oberen Stabilisierungsmittels (10) auftrifft, um das Attitude-Hump-Phänomen zu minimieren, wobei das obere Stabilisierungsmittel (10) eine obere Stabilisierungsfläche (11, 12) aufweist, die mit einer oberen Vorderkante (13) und einer oberen Hinterkante (14) versehen ist, und sich quer von einem festen Ende (15), welches an einer Kabine (2) befestigt ist, auf ein freies Ende (16) zu erstreckt, wobei das untere Stabilisierungsmittel (20) eine untere Stabilisierungsfläche (21, 22) aufweist, die mit einer unteren Vorderkante (23) und einer unteren Hinterkante (24) versehen ist, und sich quer von einem festen Ende (25) aus, das mit einer Kabine (2) verbunden ist, auf ein freies Ende (26) zu erstreckt, wobei die untere Hinterkante (24) in Längsrichtung relativ zu der oberen Hinterkante (15) zum hinteren Teil (4) des Luftfahrzeugs hin um eine Längsstrecke (D1) versetzt ist, die gleich dem Produkt einer maximalen Breite (CO) des oberen Stabilisierungsmittels (10) und einem Multiplikationskoeffizienten (K) ist, **dadurch gekennzeichnet, dass** der Multiplikationskoeffizient (K) zwischen 0 und 3 liegt, wobei der Multiplikationskoeffizient nicht kleiner als 1 ist.

6. Luftfahrzeug nach Anspruch 5,
**dadurch gekennzeichnet, dass** das obere Stabilisierungsmittel (10) mindestens eine obere Stabilisierungsfläche (11, 12) aufweist, die sich quer von einem festen Ende (15), das an der Kabine (2) befestigt ist, auf ein freies Ende (16) zu erstreckt, wobei das untere Stabilisierungsmittel (20) eine untere Stabilisierungsfläche (21, 22) aufweist, die sich quer von einem festen Ende (25), das an der Kabine (2) befestigt ist, zu einem freien Ende (26) erstreckt, wobei die untere Stabilisierungsfläche (21, 22) in der Wirbelschleppe (8) der oberen Stabilisierungsfläche (11, 12) angeordnet ist, wobei die Wirbelschleppe von einer Luftströmung (7) erzeugt wird, die den Drehflügel (5) durchquert und auf einer Saugseite (10') dieser oberen Stabilisierungsfläche (11, 12) auftrifft.

7. Luftfahrzeug nach einem der Ansprüche 5 bis 6,
**dadurch gekennzeichnet, dass** das freie Ende (16) der oberen Stabilisierungsfläche (11, 12) mit dem freien Ende (26) der unteren Stabilisierungsfläche (21, 22) durch eine aerodynamische Fläche (30) verbunden ist.

## Claims

1. A method for minimising the phenomenon of attitude hump relating to a rotorcraft (1) equipped with an airframe (2), which extends longitudinally from a front end (3) to a rear end (4), and an upper stabilisation means (10) for stabilising pitch and at least one lower stabilisation means (20) for stabilising pitch,
in which each lower stabilisation means (20) is positioned in a wake (8) of the said upper stabilisation means (10) that is generated by an air flow (7) passing through the said rotor unit (5) and impacting on a top side (10') of an upper stabilisation means (10), the said upper stabilisation means (10) comprising an upper stabilisation surface (11, 12) that is equipped with an upper leading edge (13) and an upper trailing edge (14) and extends transversely from a fixed end (15) that is fastened to an airframe (2) to a free end (16), the said lower stabilisation means (20) comprising a lower stabilisation surface (21, 22) that is equipped with a lower leading edge (23) and a lower trailing edge (24) and extends transversely from a fixed end (25) that is fastened to an airframe (2) to a free end (26), the lower trailing edge (24) is offset longitudinally in relation to the upper trailing edge (14) in the direction of the rear end by a longitudinal distance (D1) that is equal to the product of a maximum chord length (C0) of the upper stabilisation means and a multiplication coefficient (K),
**characterised in that** the said multiplication coefficient (K) is between 0 and 3, the multiplication coefficient being not less than 1.

2. A method according to Claim 1, **characterised in that** the said upper stabilisation means (10) is arranged between a first plane (P1) that passes through the said lower stabilisation means (20) and a second plane (P2) that includes the said rotor unit (5), the upper stabilisation means (10) being positioned upstream of the lower stabilisation means (20) in relation to the direction of forward advance (100) of the aircraft (1).

3. A method according to any one of Claims 1 to 2, **characterised in that** the said multiplication coefficient (K) is equal to unity.

4. A method according to any one of Claims 1 to 3, **characterised in that** each lower stabilisation means (20) is positioned in a wake (8) of the said upper stabilisation means (10) that is generated by an air flow (7) passing through the said rotor unit (5) and impacting on a top side (11') of an upper stabilisation means (10) when the said aircraft (1) has a speed of advance lower than a predetermined speed.

5. A rotorcraft (1) equipped with an airframe (2), which extends longitudinally from a front end (3) to a rear end (4), an upper stabilisation means (10) for stabilising pitch and at least one lower stabilisation means (20) for stabilising pitch,
each lower stabilisation means (20) being arranged in the wake (8) of the said upper stabilisation means (10) that is generated by an air flow (7) passing through the said rotor unit (5) and impacting on a top side (10') of an upper stabilisation means (10) in order to minimise the phenomenon of attitude hump, the said upper stabilisation means (10) comprising an upper stabilisation surface (11, 12) that is equipped with an upper leading edge (13) and an upper trailing edge (14) and extends transversely from a fixed end (15) that is fastened to an airframe (2) to a free end (16), the said lower stabilisation means (20) comprising a lower stabilisation surface (21, 22) that is equipped with a lower leading edge (23) and a lower trailing edge (24) and extends transversely from a fixed end (25) that is fastened to an airframe (2) to a free end (26), the lower trailing edge (24) is offset longitudinally in relation to the upper trailing edge (15) in the direction of the rear (4) of the aircraft by a longitudinal distance (D1) that is equal to the product of a maximum chord length (C0) of the upper stabilisation means (10) and a multiplication coefficient (K),
**characterised in that** the said multiplication coefficient (K) is between 0 and 3. the multiplication coefficient being not less than 1.

6. An aircraft according to Claim 5, **characterised in that**, with the said upper stabilisation means (10) comprising at least one upper stabilisation surface (11, 12) that extends transversely from a fixed end (15) fastened to an airframe (2) to a free end (16), the said lower stabilisation means (20) comprising a lower stabilisation surface (21, 22) that extends transversely from a fixed end (25) fastened to an airframe (2) to a free end (26), the said lower stabilisation surface (21, 22) being arranged in the wake (8) of the said upper stabilisation surface (11, 12) that is generated by an air flow (7) passing through the said rotor unit (5) and impacting on a top side (10') of this upper stabilisation surface (11, 12).

7. An aircraft according to any one of Claims 5 to 6, **characterised in that** the free end (16) of the upper stabilisation surface (11, 12) is connected to the free end (26) of the lower stabilisation surface (21, 22) by an aerodynamic surface (30).
